# EUROPEAN PATENT APPLICATION

(11) **EP 2 418 910 A1**
(43) Date of publication of application: **15.02.2012**
(21) Application number: 09843544.9
(22) Date of filing: 24.04.2009
(51) Int. Cl.: H04W 76/02

(54) **MOBILE COMMUNICATION METHOD, DEVICE AND SYSTEM FOR ENSURING SERVICE CONTINUITY**

(71) Applicant: Huawei Technologies Co., Ltd., Shenzhen, Guangdong 518129 (CN)
(72) Inventor: HUANG, Ying, Guangdong 518129 (CN); YANG, Li, Guangdong 518129 (CN)
(74) Representative: Körber, Martin Hans
(86) International application number: PCT/CN2009/071468
(87) International publication number: WO 2010/121440

(57) **Abstract**

A mobile communication method, a device, and a system are provided in embodiments of the present invention. The mobile communication system includes a UE, and a first network-side device and a second network-side device that both cover the UE. The method includes: sending, by the UE, a connection reestablishment request message to the second network-side device when the UE disconnects from the first network-side device and detects a radio link failure (RLF); attempting, by the second network-side device, to obtain UE Context of the UE; sending, by the second network-side device, a connection reestablishment failure message to the UE if the second network-side device fails to obtain the UE Context; and sending, by the second network-side device, a connection reestablishment acknowledgement message to the UE if the second network-side device successfully obtains the UE Context, and in response to the connection reestablishment acknowledgement message, connecting, by the UE, to the second network-side device. The mobile communication method, device, and system provided in embodiments of the present invention can ensure service continuity of UEs to the utmost when a cell suddenly fails and cannot work properly.

## Description

### FIELD OF THE INVENTION

Embodiments of the present invention relate to a mobile communication method, device, and system, and in particular, to a mobile communication method, device, and system for ensuring service continuity when a cell suddenly fails.

### BACKGROUND

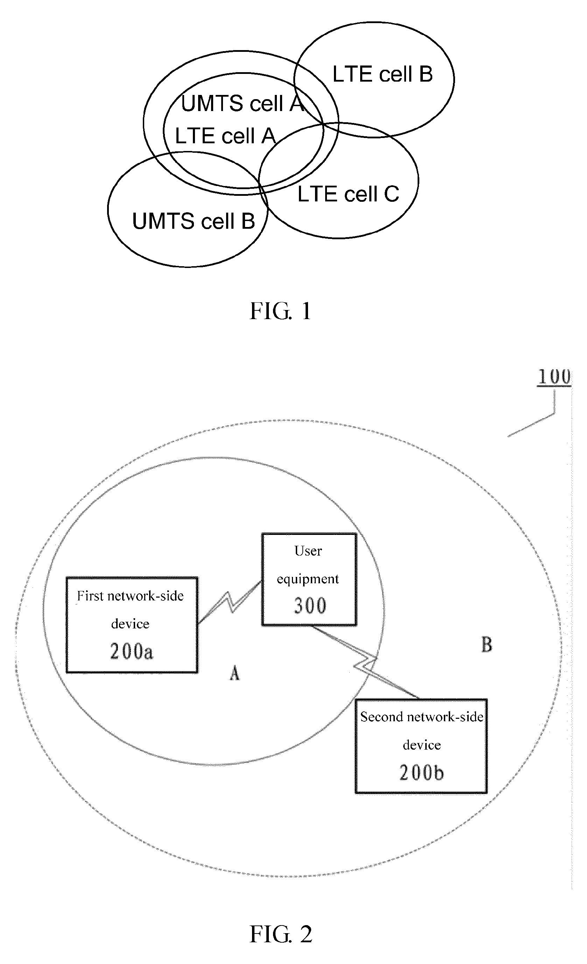

In a mobile communication system, to ensure service continuity or solve coverage, cells of different systems or at different frequencies can be used. For example, as shown in FIG 1, Universal Mobile Telecommunication System (UMTS) cell A and Long Term Evolution (LTE) cell A cover a same area.

During the running of a mobile network, a cell may suddenly encounter a fault or power failure. In this case, the cell cannot work properly, and the service of a user equipment (UE) in the active state is interrupted.

When a fault occurs in a cell suddenly, the cell cannot work properly. For the UE, a radio link failure (RLF) is detected. The UE reselects a new cell, and initiates the radio link connection reestablishment process. In the LTE system, the UE sends a Radio Resource Control (RRC) reestablishment message. In the UMTS, the UE sends a cell update message. Take the case that a new cell is an LTE cell for example. The original cell suddenly fails. Therefore, no switching preparation process exists. That is, the evolved Node B (eNB) in the new cell does not contain the UE Context of the UEs in the active state. In this case, the eNB in the new cell sends an RRC reestablishment failure message to the UEs, and the UEs enter into the idle state. In the UMTS, a new RNC sends a cell update response message that indicates reestablishment failure or does not send any message. The UE receives the message indicating reestablishment failure or does not receive any message when the timer expires. Then, switching fails.

In this scenario when the cell fails suddenly, the service continuity cannot be ensured.

A mobile communication method, device, and system are provided in embodiments of the present invention to ensure service continuity of UEs in the active state when a cell suddenly fails and cannot work properly.

A mobile communication method in a mobile communication system is provided in an embodiment of the present invention. The mobile communication system includes a first network-side device, a second network-side device, and a user equipment (UE). The first network-side device and the second network-side device both cover the UE. The UE is connected to the first network-side device. The mobile communication method includes: disconnecting, by the UE, from the first network-side device, and detecting an RLF; in response to the detected RLF, sending, by the UE, a connection reestablishment request message to the second network-side device; in response to the connection reestablishment request message, attempting, by the second network-side device, to obtain UE Context of the UE; if the second network-side device fails to obtain UE Context of the UE, sending, by the second network-side device, a connection reestablishment failure message to the UE; in response to the connection reestablishment failure message, triggering, by a non-access stratum (NAS) of the UE, a connection establishment request to connect to the second network-side device; and if the second network-side device successfully obtains UE Context of the UE, sending, by the second network-side device, a connection reestablishment acknowledgement message to the UE, and in response to the connection reestablishment acknowledgement message, connecting, by the UE, to the second network-side device. The second network-side device belongs to the UMTS system.

A mobile communication method in a mobile communication system is provided in an embodiment of the present invention. The mobile communication system includes a first network-side device, a second-side network-side device, and a UE. The first network-side device and second network-side device both cover the UE, and the UE is connected to the first network-side device. When the UE disconnects from the first network-side device, and detects an RLF, the second network-side device executes the mobile communication method. The mobile communication method includes: receiving a connection reestablishment request message sent by the UE; in response to the connection reestablishment request message, attempting to obtain the UE Context of the UE; when failing to obtain the UE Context of the UE, sending a connection reestablishment failure message to the UE; receiving a connection establishment request triggered by the NAS of the UE according to the connection reestablishment failure message; and in response to the connection establishment request, connecting to the UE. The second network-side device belongs to the UMTS system.

A mobile communication method in a mobile communication system is provided in an embodiment of the present invention. The mobile communication system includes a first network-side device, a second network-side device, and a UE. The first network-side device and the second network-side device both cover the UE. The UE is connected to the first network-side device. When the UE disconnects from the first network-side device, and detects an RLF, the mobile communication method includes: sending, by the UE, a connection reestablishment request message to the second network-side device to enable the second network-side device to attempt to obtain the UE Context of the UE in response to the connection reestablishment request message; in response to a connection reestablishment failure message which indicates failure to obtain the UE Context and is received from the second network-side device, triggering, by an NAS of the UE, a connection establishment request to connect to the second network-side device; and in response to a connection reestablishment acknowledgement message which indicates success of obtaining the UE Context and is received from the second network-side device, connecting, by the UE, to the second network-side device. The second network-side device belongs to the UMTS system.

A mobile communication method in a mobile communication system is provided in an embodiment of the present invention. The mobile communication system includes a first network-side device, a second network-side device, and a UE. The first network-side device and the second network-side device both cover the UE. The UE is connected to the first network-side device. The mobile communication method includes: backing up, by the first network-side device, UE Context of the UE outside the first network-side device; when disconnecting from the first network-side device and detecting an RLF, sending, by the UE, a connection reestablishment request message to the second network-side device; in response to the connection reestablishment request message, obtaining, by the second network-side device, the UE Context; when successfully obtaining the UE Context, sending, by the second network-side device, a connection reestablishment acknowledgement message to the UE; and in response to the connection reestablishment acknowledgement message, connecting, by the UE, to the second network-side device.

A mobile communication method in a mobile communication system is provided in an embodiment of the present invention. The mobile communication system includes a first network-side device, a second network-side device, and a UE. The first network-side device and second network-side device both cover the UE. The UE is connected to the first network-side device. The mobile communication method includes: backing up, by the first network-side device, UE Context of the UE outside the first network-side device; receiving, by the second network-side device, a connection reestablishment request message sent by the UE; in response to the connection reestablishment request message, obtaining, by the second network-side device, the UE Context of the UE; and when successfully obtaining the UE Context, sending, by the second network-side device, a connection reestablishment acknowledgement message to the UE so that the UE is connected to the second network-side device.

A mobile communication system is provided in an embodiment of the present invention. The mobile communication system includes a first network-side device, a second network-side device, and a UE. The first network-side device and the second network-side device both cover the UE. The UE is connected to the first network-side device. The UE includes: a connection reestablishment requesting unit, configured to send a connection reestablishment request message to the second network-side device when the UE disconnects from the first network-side device and detects an RLF; and a connecting unit, configured to: in response to a connection reestablishment failure message received from the second network-side device, enable an NAS of the UE to trigger a connection establishment request to connect to the second network-side device, and, in response to a connection reestablishment acknowledgement message received from the second network-side device, enable the UE to connect to the second network-side device. The second network-side device includes: an obtaining unit, configured to: in response to the connection reestablishment request message, attempt to obtain UE Context of the UE; and a processing unit, configured to send the connection reestablishment failure message to the UE when the obtaining unit fails to obtain the UE Context of the UE, and send the connection reestablishment acknowledgement message to the UE when the obtaining unit successfully obtains the UE Context of the UE. The second network-side device belongs to the UMTS system.

A second network-side device in a mobile communication system is provided in an embodiment of the present invention. The mobile communication system includes the second network-side device, a first network-side device, and a UE. The second network-side device and the first network-side device both cover the UE. The UE is connected to the first network-side device. The second network-side device belongs to the UMTS, and includes: an obtaining unit, configured to: in response to the connection reestablishment request message sent by the UE, attempt to obtain UE Context of the UE; and a processing unit, configured to send a connection reestablishment failure message to the UE when the obtaining unit fails to obtain the UE Context of the UE to enable an NAS of the UE to trigger a connection establishment request according to the connection reestablishment failure message, or configured to send a connection reestablishment acknowledgement message to the UE when the obtaining unit successfully obtains the UE Context of the UE to enable the UE to connect to the second network-side device.

A UE in a mobile communication system is provided in an embodiment of the present invention. The mobile communication system includes a first network-side device, a second network-side device, and the UE. The first network-side device and the second network-side device both cover the UE. The UE is connected to the first network-side device. The second network-side device belongs to the UMTS system. The UE includes: a requesting unit, configured to send a connection reestablishment request message to the second network-side device when the UE disconnects from the first network-side device and detects an RLF to enable the second network-side device to attempt to obtain UE Context of the UE; and a connecting unit, configured to: in response to a connection reestablishment failure message which indicates failure to obtain the UE Context of the UE and is received from the second network-side device, enable an NAS of the UE to trigger a connection establishment request to connect to the second network-side device, and, in response to a connection reestablishment acknowledgement message which indicates success of obtaining the UE Context and is received from the second network-side device, enable the UE to connect to the second network-side device.

A mobile communication system is provided in an embodiment of the present invention. The mobile communication system includes a first network-side device, a second network-side device, and a UE. The first network-side device and second network-side device cover the UE. The UE is connected to the first network-side device. The first network-side device includes a backing up unit, configured to back up UE Context of the UE outside the first network-side device. The UE includes: a requesting unit, configured to send a connection reestablishment request message to the second network-side device when the UE disconnects from the first network-side device and detects an RLF to enable the second network-side device to attempt to obtain UE Context of the UE; and a connecting unit, configured to: in response to a connection reestablishment acknowledgement message received from the second network-side device, enable the UE to connect to the second network-side device. The second network-side device includes: an obtaining unit, configured to obtain UE Context in response to the connection reestablishment request message; and a processing unit, configured to send the connection reestablishment acknowledgement message to the UE when the obtaining unit successfully obtains the UE Context.

A mobile communication method, device, and system are provided in embodiments of the present invention to ensure service continuity of UEs when a cell suddenly fails and cannot work properly.

### BRIEF DESCRIPTION OF THE DRAWINGS

To better illustrate technical solution of the present invention, the drawings that need to be used in embodiments of the present invention or in the description of existing technologies are briefly introduced. Evidently, the drawings merely provide some embodiments of the present invention. Those skilled in the art can obtain other drawings based on these drawings without innovative work.
FIG 1 is a schematic block diagam of a coverage of cells of different systems;
FIG 2 is a schematic block diagam of a mobile communication system according to an embodiment of the present invention;
FIG 3 is a flow chart of a mobile communication method according to an embodiment of the present invention;
FIG 4 is a flow chart of a mobile communication method according to another embodiment of the present invention;
FIG 5 is a block diagram of a detailed structure of a mobile communication system according to an embodiment of the present invention;
FIG 6 is a block diagram showing a detailed structure of a mobile communication system according to another embodiment of the present invention;
FIG 7 is a block diagram showing a detailed structure of a mobile communication system according to still another embodiment of the present invention; and
FIG 8 is a block diagram showing a detailed structure of a mobile communication system according to further still another embodiment of the present invention.

### DETAILED DESCRIPTION

The technical solution under the present invention is elaborated below with reference to the accompanying drawings. Evidently, the embodiments described below are only some embodiments rather than all embodiments of the present invention. Those skilled in the art can derive other embodiments from the embodiments given herein without making any creative effort, and all such embodiments are covered in the protection scope of the present invention.

FIG 2 is a schematic diagram of a mobile communication system 100 according to an embodiment of the present invention. The system 100 includes a first network-side device 200a, a second network-side device 200b, and a UE 300. In the following description, the two network-side devices 200a and 200b are collectively called network-side device 200.

The UE 300 is used by a user, and includes but is not limited to a mobile phone, a laptop computer, a personal digital agent (PDA), a laptop game box, and a laptop multimedia machine. The UE 300 is referred to as UE 300 for short hereinafter.

The network-side device 200 is configured to manage the services between the UE 300 and the mobile communication network, including but not limited to all kinds of NodeBs, radio network controllers (RNCs), and radio network sub-systems (RNSs). For example, in an LTE system, the network-side device 200 may be an eNB; in a UMTS, the network-side device 200 may be an RNC. The first network-side device 200a and second network-side device 200b may belong to a same communication network, or frequency, for example, the UMTS system. The first network-side device 200a and second network-side device 200b may also belong to different communication networks or frequencies, for example, they may belong to any two systems among the following ones: LTE, UMTS, and GSM.

The first network-side device 200a and second network-side device 200b may both cover the UE 300. That is, the UE 300 is located in cell A (the scope enclosed by the solid line in FIG 2) controlled by the first network-side device 200a, and cell B (the scope enclosed by the dotted line in FIG 2) controlled by the second network-side device 200b at the same time. In an embodiment of the present invention, suppose that the UE 300 is first connected to the first network-side device 200a. That is, the service between the UE 300 and the first network-side device 200a is in the active state.

It should be noted that, the position of each device and cell coverage scope in FIG 2 are only exemplary but do not confine the scope of the embodiment of the present invention. In this embodiment, cell A and cell B only need to both cover the UE.

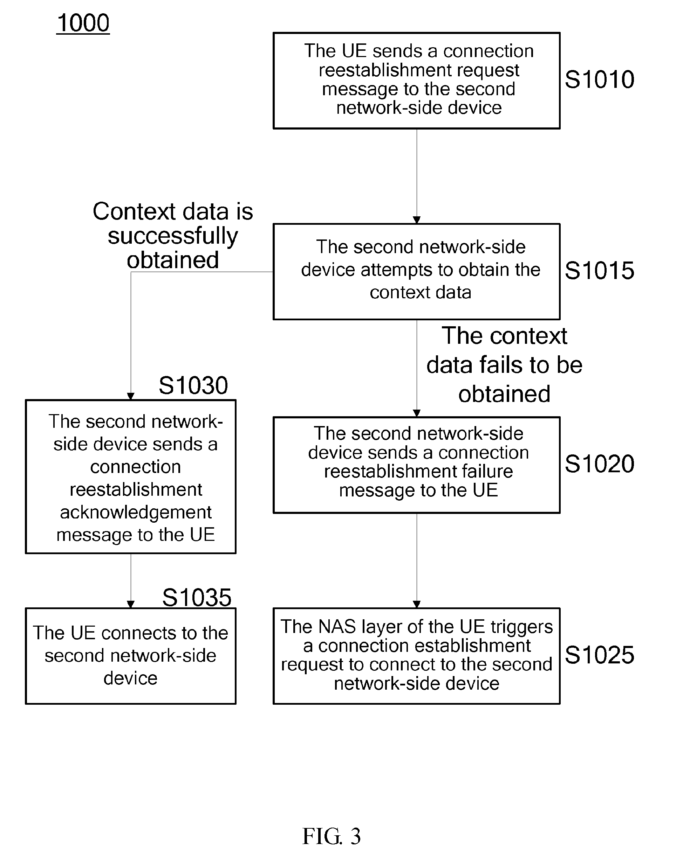

FIG 3 is a flow chart of a mobile communication method 1000 according to an embodiment of the present invention.

In step S1010 of the mobile communication method 1000, the first network-side device 200a may fail or encounter a power failure suddenly. In this case, the UE 300 disconnects from the first network-side device 200a. Thus, the UE 300 detects a radio link failure (RLF). In this case, the UE 300 needs to reselect a new cell and initiate a process of reestablishing a radio link.

Therefore, in response to the detection of the RLF, the UE 300 sends a connection reestablishment request message to the second network-side device 200b. The connection reestablishment request message may be determined based on the type of the second network-side device 200b. For example, if the second network-side device 200b is an eNB in an LTE system, the UE 300 may generate an RRC reestablishment message to serve as the connection reestablishment request message. Or, if the second network-side device 200b is an RNC in a UMTS system, the UE 300 may generate a cell update message to serve as the connection reestablishment request message.

Then, in step S1015, in response to the connection reestablishment request message, the second network-side device 200b attempts to obtain UE Context of the UE 300. The details are provided in the description about step S1015.

If, in step S1015, the second network-side device 200b fails to obtain UE Context of the UE 300, the method 1000 proceeds to step S1020, in which the second network-side device 200b sends a connection reestablishment failure message to the UE 300.

The connection reestablishment failure message may be determined based on the type of the second network-side device 200b. For example, when the second network-side device 200b is an eNB in an LTE system, in step S1020, as a connection reestablishment failure message, the eNB 200b may generate an RRC connection reestablishment failure message and send the message to the UE 300, or a cell update response message which indicates reestablishment failure, or does not send any message. The UE receives the reestablishment failure message, or does not receive any message after the timer expires.

When the second network-side device is an RNC in a UMTS system, in step S1020, the RNC 200b may generate a cell update failure message as the connection reestablishment failure message and send the message to the UE 300.

If, in step S1015, the second network-side device 200b successfully obtains UE Context, then, in step S1030, the second network-side device 200b sends a connection reestablishment acknowledgement message to the UE 300. Then, in step S1035, in response to the connection reestablishment acknowledgement message, the UE 300 may connect to the second network-side device 200b to recover the service.

In the same way, the connection reestablishment acknowledgement message may be determined based on the type of the second network-side device 200b. For example, if the second network-side device 200b is an eNB in an LTE system, the UE 200 may generate an RRC reestablishment response message to serve as the connection reestablishment acknowledgement message in step S1035. When the second network-side device is an RNC in a UMTS system, in step S1035, the RNC 200b may generate a cell update confirm message as the connection reestablishment acknowledgement message and send the message to the UE 300.

It should be noted that, the connection reestablishment request message, connection reestablishment failure message, and connection reestablishment acknowledgement message described above are merely used to help those skilled in the art understand the embodiments of the present invention but do not confine the scope of the present invention. Those skilled in the art can easily construct messages of different types according to actual applications to realize the functions of the preceding messages. Such messages also fall in the scope of the present invention.

Through the preceding mobile communication method 1000, when a cell suddenly fails and cannot work properly, the service continuity of the UE can be ensured to the utmost. The method 1000 is highly applicable to connection reestablishment in cells covered by different systems or frequencies at the same time.

The following describes a method of attempting, by the network-side device 200b, to obtain UE Context of the UE 300 according to an embodiment of the present invention. In this embodiment, the network-side device 200b belongs to a UMTS system, for example, it is an RNC in the UMTS system.

In step S 1015 of the method 1000, a new RNC (that is, RNC 200b) finds that no UE Context of the UE 300 exists, which triggers the RNC 200b to request the source RNC (that is, RNC 200a) for UE Context. If the source RNC 200a is normal, the RNC 200a sends the UE Context, triggering forward switching flow of the related Iu interface. In this case, the method 1000 proceeds to step S1030, in which the RNC 200b sends a cell update confirm message to the UE 300. If the source RNC 200a is abnormal, the new RNC 200b fails to request for the UE Context. In this case, the method 1000 proceeds to step S1020, in which the new RNC 200b sends a cell update failure message or a cell update response message which indicates reestablishment failure, or does not send any message to the UE 300 as the connection reestablishment failure message. Then, in step S1025, in response to the connection reestablishment failure message (including the case in which no message is received after the timer expires), a non-access stratum (NAS) of the UE 300 triggers a connection establishment request to connect to the second network-side device 200b for service recovery.

In the preceding description, after the NAS of the UE triggers a connection establishment request, new UE Context of the UE 300 is generated. The second network-side device 200b obtains the UE Context to establish a connection with the UE.

It is also possible that during normal working (connected with the UE 300), the first network-side device 200a backs up the UE Context of the UE 300 outside the first network-side device 200a. In this case, when the first network-side device 200a fails, the second network-side device 200b may obtain UE Context to establish a connection with the UE 300.

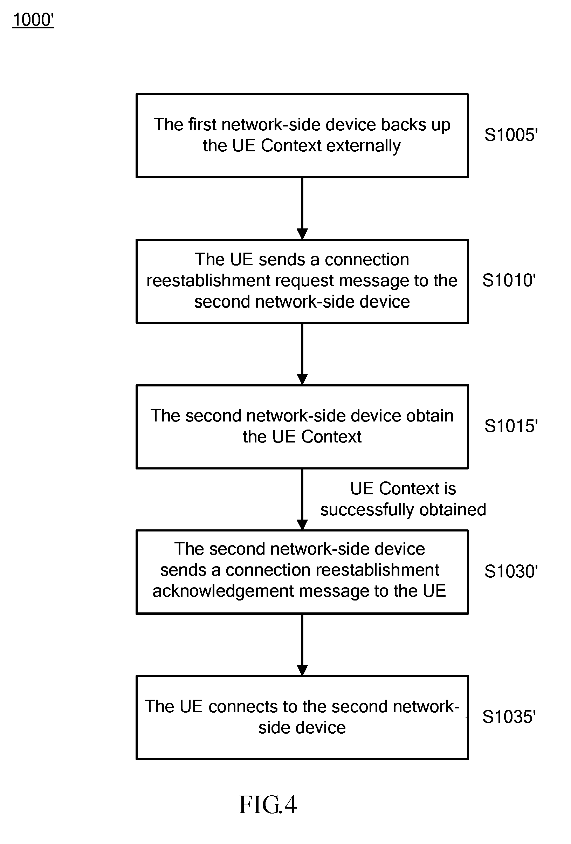

FIG 4 is a flow chart of a mobile communication method 1000' according to another embodiment of the present invention. The same flags in FIG 3 and FIG 4 indicate the same or similar process.

In step S1005', the first network-side device 200a is still connected with the UE 300. In this case, the first network-side device 200a has the UE Context of the UE 300. Therefore, the first network-side device 200a may back up the UE Context outside the first network-side device 200a.

According to an embodiment of the present invention, in step S1005', the first network-side device 200a may send the UE Context of the UE 300 to the UE 300. Then, the UE 300 receives and saves the UE Context. In this way, the UE 300 saves the UE Context.

In this case, in step S1005', the UE Context can be sent to all UEs or certain UEs. The first network-side device 200a may determine the priority of the UE 300, and select certain UEs to send the UE Context according to the determined priorities.

For example, the first network-side device 200a may determine the UEs to which the UE Context is to be sent according to the adjacency priority, UE priority, and same coverage option. For example, in the case of same coverage by different systems, the priority of the cell of the different system may be set to be high, and UE Context is sent to these UEs only. In addition, multiple pieces of UE Context in the local system and the different system may be sent to the UE 300. For example, if the local system is an LTE system, and the cell of the different system with same coverage is a UMTS (or GSM) cell, the eNB finds out the different system (UMTS or GSM) with same coverage according to the adjacency cell relationship, and performs related UE Context conversion, that is, Radio Resource Manage (RRM), according to the radio configuration of the different system (UMTS or GSM).

The first network-side device 200a selects UE 300s with high priorities based on the UE subscription information, service type QoS Class Identifier (QCI), or Subscriber Profile Identity (SPID), and sends the UE Context of the UEs to the UE 300 through an RRC message (for example, an RRC reallocation message or other RRC message).

It should be noted that, in step S1005' the first network-side device 200a may send the UE Context to the UE 300 each time when the Context is changed, or send the UE Context regularly to the UE 300.

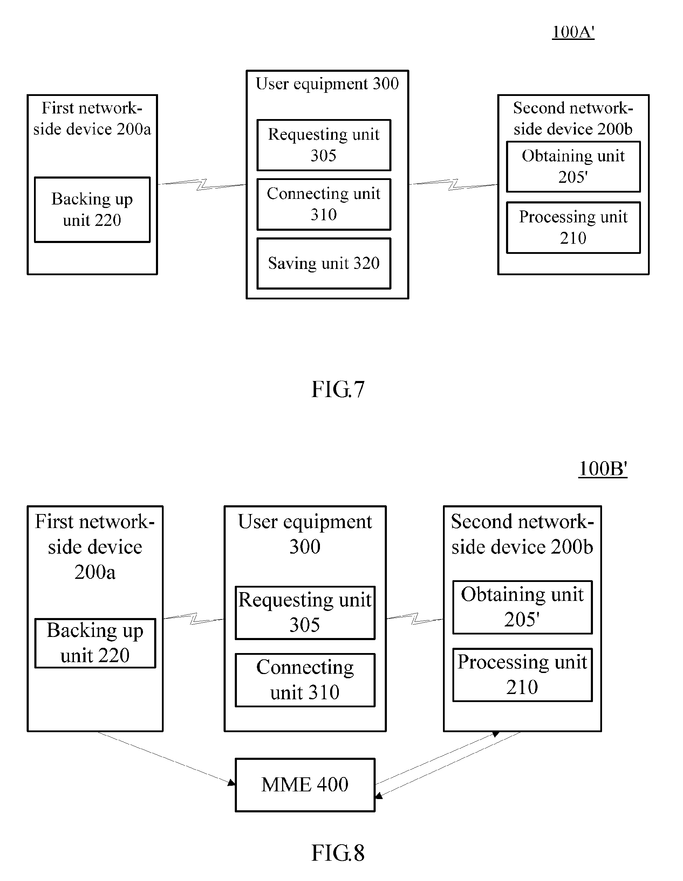

In addition to the UE 300, the first network-side device 200a may also send the UE Context to other devices outside the first network-side device 200a, for example, the core network device. According to another embodiment of the present invention, in step S1005', the first network-side device 200a may send the context data (UE Context) of the UE 300 to the MME (as shown in FIG 7) in the mobile communication system 100. Then, the MME receives and saves the UE Context. In the same way, multiple pieces of UE Context, that is, the UE Context of the local system and the UE Context of the different system, can be sent.

In this case, in step S1005', the UE Context may be sent to the MME for all UEs or certain UEs. The first network-side device 200a may determine the priority of the UE 300, and select certain UEs to send the UE Context of the UE 300 to the MME according to the determined priorities.

For example, the first network-side device 200a may determine the UE 300 whose UE Context is to be sent to the MME according to the adjacency priority, UE 300 priority, and common coverage option. In the case of same coverage by different systems, the priority of the cell of the different system may be set to be high, and the UE Context of only these UEs is sent to the MME. In addition, multiple pieces of UE Context in the local system and the different system may be sent to the MME. For example, if the local system is an LTE system, and the cell of the different system with same coverage is a UMTS (or GSM) cell, then the first network-side device 200a finds out the different system (UMTS or GSM) with same coverage according to the adjacency cell relationship, and performs related UE Context conversion (i.e., RRM algorithm), according to the radio configuration of the different system (UMTS or GSM).

For the LTE system, the first network-side device eNB 200a selects UE 300s with higher priorities based on the UE subscription information, QCI, or SPID, and sends the UE Context of these UEs through the UPLINK NAS TRANSPORT (uplink NAS transport) S1 interface message or other S 1 message to the MME.

It should be noted that, in step S1005' the first network-side device 200a may send the UE Context to the MME each time when the Context is changed, or send the UE Context regularly to the MME.

For the UMTS system, the first network-side device 200a corresponds to an RNC. The S 1 interface corresponds to the Iu interface. The first network-side device 200a may send the UE Context to the SGSN or other core network device.

It should be noted that the various devices outside the first network-side device 200a for backing up the UE Context are only exemplary, but do not constitute restrictions on the embodiments of the present invention. Those skilled in the art can use other existing or new devices to back up the UE Context based on actual applications. These devices also fall in the scope of the embodiments of the present invention.

After the UE Context is backed up outside the first network-side device 200a, in step S1010', when the UE 300 disconnects from the first network-side device 200a and detects an RLF due to failure of the first network-side device 200a, the UE 300 sends a connection reestablishment request message to the second network-side device 200b.

Then, in step S1015', the second network-side device 200b receives the connection reestablishment request message and obtains the UE Context.

According to an embodiment of the present invention, when the first network-side device 200a sends the UE Context to the UE 300 in step S1005', because the UE 300 has its own UE Context, the UE 300 may put the UE Context into the connection reestablishment request message in step S1010'. In this case, in step S1015', the second network-side device 200b may extract the UE Context out of the received connection reestablishment request message.

According to another embodiment of the present invention, in step S1005', when the first network-side device 200a sends the UE Context to the MME, after the second network-side device 200b receives the connection reestablishment request message in step S1015', the second network-side device 200b does not find the UE Context. In this case, the second network-side device 200b sends a UE Context request message to the MME in response to the connection reestablishment request message to obtain the UE Context from the MME. The UE Context of each UE may be requested from the MME when a UE sends a connection reestablishment request. The UE Context of certain UEs with high priorities can be requested based on calculation. For the calculation of priorities, see the description in step S1005'.

For the LTE system, the UE Context request message sent by the second network-side device 200b to the MME is an S 1 interface message. For example, the message may be an initial UE message or a new S 1 interface message. The MME may send the UE Context to the second network-side device eNB 200b through the initial Context request setup (initial context request setup) message or other new S 1 interface message.

For the UMTS system, the first network-side device 200b corresponds to an RNC. The S1 interface corresponds to the Iu interface. The UE Context is requested and sent through an Iu interface message.

In step S1015', if the second network-side device 200b is an RNC or BSC of a different system, the second network-side device RNC or BSC 200b requests the SGSN for the UE Context through an IU/A interface message. The SGSN sends an S3 interface message to the related MME to request for the related UE Context. The MME sends the related UE Context through an S3 interface message.

Returning to FIG 4, after successfully obtaining the UE Context, in step S1030', the second network-side device 200b sends a connection reestablishment acknowledgement message to the UE 300. Then, in step S1035, in response to the connection reestablishment acknowledgement message, the UE 300 can connect to the second network-side device 200b to recover the service.

Through the method 1000', when a cell suddenly fails and cannot work properly, the service continuity of the UE can be ensured to the utmost.

According to the mobile communication method in the embodiment of the present invention, services in the faulty cell can be recovered through NAS triggering. Or, according to the mobile communication method in the embodiment of the present invention, the UE Context may be transferred to the new eNB/RNC through the UE or MME.

It is apparent for those skilled in the art that the steps in the flow charts of the methods described previously and in the drawings can be deleted or replaced, one or more steps may be added, the execution sequence of certain steps may be changed, or certain steps may be executed at the same time according to actual applications.

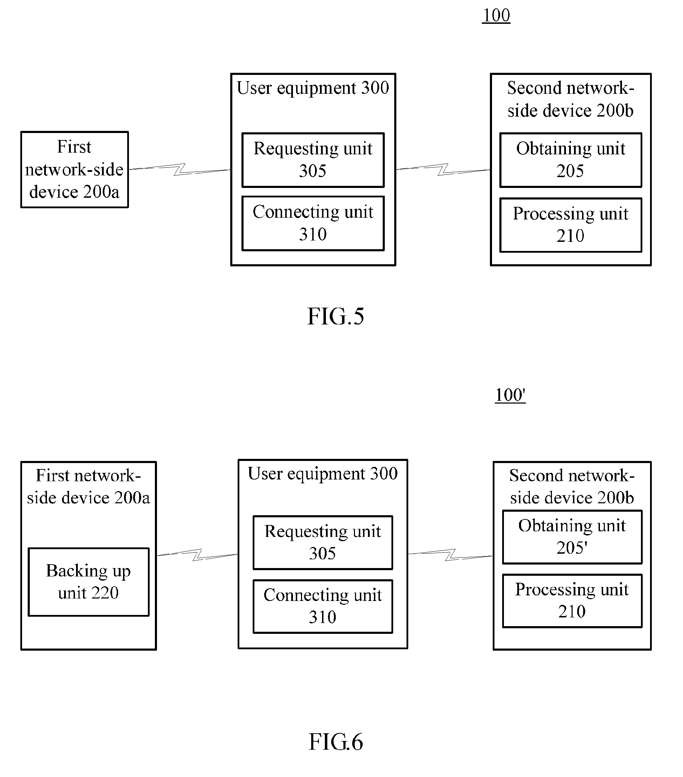

FIG 5 is a block diagram of a detailed structure of the mobile communication system 100 in FIG 1 according to an embodiment of the present invention. Each part of the mobile communication system 100 may execute each mobile communication method described previously.

The UE 300 may include a requesting unit 305 and a connecting unit 310. The requesting unit 305 is configured to send a connection reestablishment request message to the second network-side device 200b when the UE 300 disconnects from the first network-side device 200a and detects a radip link failure (RLF). In response to a connection reestablishment failure message received from the second network-side device 200b, the connecting unit 310 enables the NAS layer of the UE 300 to trigger a connection establishment request to connect to the second network-side device 200b. In response to a connection reestablishment acknowledgement message received from the second network-side device 200b, the connecting unit 310 enables the UE 300 to connect to the second network-side device 200b.

The second network-side device 200b may include an obtaining unit 205 and a processing unit 210. In response to the connection reestablishment request message, the obtaining unit 205 attempts to obtain the UE Context of the UE 300. The processing unit 210 sends a connection reestablishment failure message to the UE 300 when the obtaining unit 205 cannot obtain the UE Context. The processing unit 210 sends a connection reestablishment acknowledgement message to the UE 300 when the obtaining unit 205 successfully obtains the UE Context.

According to an embodiment of the present invention, the second network-side device 200b belongs to a UMTS system.

According to an embodiment of the present invention, the obtaining unit 205 of the second network-side device 200b may obtain the UE Context from the first network-side device 200a.

Each part of the mobile communication system 100 may execute the preceding mobile communication method 1000.

FIG 6 is a block diagram of a detailed structure of a mobile communication system 100' according to another embodiment of the present invention. The same or similar drawing marks of the mobile communication system 100' and the mobile communication system 100 indicate the same or similar parts. In addition, the first network-side device 200a includes a backing up unit 220 that is configured to back up the UE Context outside the first network-side device 200a. The obtaining unit 205' of the second network-side device may obtain the UE Context in response to the connection reestablishment request message.

The functions of other parts of the mobile communication system 100' are similar to those of the related parts of the mobile communication system 100, and each part of the mobile communication system 100' may execute the mobile communication system 1000' as shown in FIG 4.

FIG 7 is a block diagram showing a detailed structure of a mobile communication system 100A' according to another embodiment of the present invention. The mobile communication system 100A' includes all parts of the mobile communication system 100'.

In this embodiment, the backing up unit of the first network-side device 200a is configured to send the UE Context to the UE 300. In this case, the UE 300 further includes a saving unit 320 that is configured to receive the UE Context from the backing up unit 220 and save the UE Context.

In this embodiment, the connection reestablishment request message includes the UE Context. The obtaining unit 205' in the second network-side device 200b extracts the UE Context out of the connection reestablishment request message.

The functions of the rest parts of the mobile communication system 100A' are similar to those of the related parts of the mobile communication system 100', and are not described again.

FIG 8 is a block diagram showing a detailed structure of a mobile communication system 100B' according to another embodiment of the present invention. The mobile communication system 100B' includes all parts of the mobile communication system 100'.

In this embodiment, the mobile communication system 100B' further includes an MME 400.

In this embodiment, the backing up unit of the first network-side device 200a sends the UE Context of the UE 300 to the MME 400, and the MME 400 receives the UE Context from the backing up unit 220 and saves the UE Context.

In this case, the obtaining unit 205" of the second network-side device 200b receives the UE Context from the MME 400.

The functions of the rest parts of the mobile communication system 100B' are similar to those of the related parts of the mobile communication system 100', and are not described again.

The mobile communication method, device, and system provided in embodiments of the present invention can ensure service continuity of UEs to the utmost when a cell suddenly fails and cannot work properly.

The preceding takes LTE, UMTS, and GSM for example to describe embodiments of the present invention. It is understandable, however, to those skilled in the art that these examples are only intended to help understanding, but not to confine the scope of the present invention. The method, device, and system of the present invention can apply to other communication schemes.

The messages in the embodiments of the present invention are not limited to the preceding types, but other existing or new messages may also be used. These messages fall within the protection scope of the present invention.

The structures of the systems and devices and their functions described previously and shown in the drawings are not exhaustive. Components may be deleted or replaced according to the actual applications. The flow charts of the methods described previously and shown in the drawings are not exhaustive. One or multiple steps in the methods may be added, deleted, or replaced, the execution sequence of certain steps may be changed, or certain steps may be executed at the same time according to the actual applications.

It can be realized by those skilled in the art that the units and algorithm steps in each example described in the public embodiments of the present invention can be implemented by electronic hardware, computer software, or a combination of both. To clearly describe the changeability of the hardware and software, the composition and steps of each example are generally described according to functions in the preceding description. Whether these functions are executed through hardware or software depends on the specific applications and design constraints of the technical scheme. Those skilled in the art can use different methods to implement the described functions for each specific application. However, such implementation should not be considered as beyond the scope of the present invention.

The steps of the methods or algorithms described in the public embodiments of the present invention can be implemented by hardware, software modules executed by the processor, or a combination of both. The software module can be placed in a Random Access Memory (RAM), memory, Read Only Memory (ROM), electrically programmable ROM, electrically erasable and programmable ROM, register, hard disk, mobile disk, CD-ROM, or any other form of storage medium known to the technical domain.

Certain embodiments of the present invention are provided and described. However, those skilled in the art should understand that without departing from the principle and spirit of the present invention, modifications can be made to these embodiments, and these modifications should fall within the protection scope of the present invention.

## Claims

1. A mobile communication method in a mobile communication system, the mobile communication system comprising a first network-side device, a second network-side device, and a user equipment, UE, the first network-side device and second network-side device both covering the UE, the UE being connected to the first network-side device, **characterized in that**, the method comprises:
sending, by the UE, a connection reestablishment request message to the second network-side device when the UE disconnects from the first network-side device and detects a radio link failure, RLF;
in response to the connection reestablishment request message, attempting, by the second network-side device, to obtain UE Context of the UE; and
if the second network-side device fails to obtain UE Context of the UE, sending, by the second network-side device, a connection reestablishment failure message to the UE; in response to the connection reestablishment failure message, triggering, by a non-access stratum of the UE, a connection establishment request to connect to the second network-side device; or
sending, by the second network-side device, a connection reestablishment acknowledgement message to the UE if the second network-side device successfully obtains the UE Context, and in response to the connection reestablishment acknowledgement message, connecting, by the UE, to the second network-side device,
wherein, the second network-side device belongs to a Universal Mobile Telecommunication System.

2. The mobile communication method according to claim 1, **characterized in that**, the attempting, by the second network-side device, to obtain UE Context of the UE comprises: attempting, by the second network-side device, to obtain UE Context of the UE from the first network-side device.

3. A mobile communication method in a mobile communication system, the mobile communication system comprising a first network-side device, a second network-side device, and a user equipment, UE; the first network-side device and second network-side device both covering the UE; the UE being connected to the first network-side device, **characterized in that**, when the UE disconnects from the first network-side device and detects a radio link failure, RLF, the second network-side device executes the mobile communication method, and the mobile communication method comprises:
receiving a connection reestablishment request message sent by the UE;
in response to the connection reestablishment request message, attempting to obtain UE Context of the UE;
sending a connection reestablishment failure message to the UE when failing to obtain the UE Context of the UE;
receiving a connection establishment request triggered by a non-access stratum of the UE according to the connection reestablishment failure message; and
in response to the connection establishment request, connecting to the UE, wherein, the second network-side device belongs to a Universal Mobile Telecommunication System.

4. A mobile communication method in a mobile communication system, the mobile communication system comprising a first network-side device, a second network-side device, and a user equipment, UE, the first network-side device and second network-side device both covering the UE, the UE being connected to the first network-side device, **characterized in that**, and when the UE disconnects from the first network-side device and detects a radio link failure, RLF, the mobile communication method comprises:
sending, by the UE, a connection reestablishment request message to the second network-side device to enable the second network-side device to attempt to obtain the UE Context of the UE in response to the connection reestablishment request message;
in response to a connection reestablishment failure message which indicates failure to obtain the UE Context and is received from the second network-side device, triggering, by a non-access stratum of the UE, a connection establishment request to connect to the second network-side device; or
in response to a connection reestablishment acknowledgement message which indicates success of obtaining the UE Context and is received from the second network-side device, connecting, by the UE, to the second network-side device,
wherein, the second network-side device belongs to a Universal Mobile Telecommunication System.

5. A mobile communication method in a mobile communication system, the mobile communication system comprising a first network-side device, a second network-side device, and a user equipment, UE, the first network-side device and second network-side device both covering the UE, the UE being connected to the first network-side device, **characterized in that**, the method comprises:
backing up, by the first network-side device, UE Context of the UE outside the first network-side device;
sending, by the UE, a connection reestablishment request message to the second network-side device, when the UE disconnects from the first network-side device and detects a radio link failure, RLF;
in response to the connection reestablishment request message, attempting, by the second network-side device, to obtain UE Context of the UE;
sending, by the second network-side device, a connection reestablishment acknowledgement message to the UE when the second network-side device successfully obtains the UE Context; and
in response to the connection reestablishment acknowledgement message, connecting, by the UE, to the second network-side device.

6. The mobile communication method according to claim 5, **characterized in that**, the backing up, by the first network-side device, UE Context of the UE outside the first network-side device comprises:
sending, by the first network-side device, the UE Context of the UE to the UE; and
receiving and saving, by the UE, the UE Context.

7. The mobile communication method according to claim 6, **characterized in that**, the sending, by the first network-side device, the UE Context of the UE to the UE comprises:
sending, by the first network-side device, the UE Context to the UE through an RRC message.

8. The mobile communication method according to claim 6, **characterized in that**, the sending, by the UE, the connection reestablishment request message comprises: putting, by the UE, the UE Context received and saved by the UE into the connection reestablishment request message, and sending the connection reestablishment request message; and
the obtaining, by the second network-side device, the UE Context comprises: extracting, by the second network-side device, the UE Context out of the connection reestablishment request message.

9. The mobile communication method according to claim 6, **characterized in that**, the sending, by the first network-side device, UE Context of the UE comprises: determining, by the first network-side device, a priority of the UE, and sending the UE Context of the UE to the UE according to the determined priority.

10. The mobile communication method according to claim 5, **characterized in that**, the backing up, by the first network-side device, UE Context of the UE outside the first network-side device comprises:
sending, by the first network-side device, the UE Context of the UE to a mobility management entity, MME; and
receiving and saving, by the MME, the UE Context.

11. The mobile communication method according to claim 10, **characterized in that**, the obtaining, by the second network-side device, the UE Context comprises:
requesting, by the second network-side device, the MME for the UE Context received and saved by the MME.

12. The mobile communication method according to claim 11, **characterized in that**, the requesting, by the second network-side device, the MME for the UE Context received and saved by the MME comprises:
requesting, by the second network-side device, the MME for the UE Context through an Iu/S1 and/or S3 message.

13. The mobile communication method according to claim 10, **characterized in that**, the sending, by the first network-side device, the UE Context of the UE to the MME comprises:
determining, by the first network-side device, a priority of the UE, and sending the UE Context of the UE to the MME according to the determined priority.

14. The mobile communication method according to claim 5, **characterized in that**, the first network-side device belongs to a first system, the second network-side device belongs to a second system which is different from the first system, and
the backing up, by the first network-side device, UE Context of the UE outside the first network-side device comprises: backing up, by the first network-side device, UE Context of the UE that belongs to the first system and/or UE Context of the UE that belongs to the second system.

15. A mobile communication method in a mobile communication system, the mobile communication system comprising a first network-side device, a second network-side device, and a UE, the first network-side device and second network-side device both covering the UE, the UE being connected to the first network-side device, **characterized in that**, when the UE disconnects from the first network-side device and detects a radio link failure, RLF, the mobile communication method comprises:
receiving, by the second network-side device, a connection reestablishment request message sent by the UE;
in response to the connection reestablishment request message, obtaining, by the second network-side device, backup of the UE Context of the UE made outside the first network-side device by the first network-side device; and
sending, by the second network-side device, a connection reestablishment acknowledgement message to the UE to enable the UE to connect to the second network-side device when the second network-side device successfully obtains the UE Context.

16. A mobile communication system, comprising a first network-side device, a second network-side device, and a user equipment, UE, the first network-side device and second network-side device both covering the UE, the UE being connected to the first network-side device, **characterized in that**
the UE comprises:
a requesting unit, configured to send a connection reestablishment request message to the second network-side device when the UE disconnects from the first network-side device and detects a radio link failure, RLF; and
a connecting unit, configured to: in response to a connection reestablishment failure message received from the second network-side device, enable a non-access stratum of the UE to trigger a connection establishment request to connect to the second network-side device, and, in response to a connection reestablishment acknowledgement message received from the second network-side device, enable the UE to connect to the second network-side device, and
the second network-side device comprises:
an obtaining unit, configured to: in response to the connection reestablishment request message, attempt to obtain UE Context of the UE; and
a processing unit, configured to send the connection reestablishment failure message to the UE when the obtaining unit fails to obtain the UE Context of the UE, or send the connection reestablishment acknowledgement message to the UE when the obtaining unit successfully obtains the UE Context of the UE,
wherein, the second network-side device belongs to a Universal Mobile Telecommunication System.

17. The mobile communication system according to claim 16, **characterized in that**, the attempting, by the obtaining unit, to obtain UE Context of the UE comprises: attempting, by the obtaining unit, to obtain UE Context of the UE from the first network-side device.

18. A second network-side device in a mobile communication system, the mobile communication system comprising the second network-side device, a first network-side device, and a user equipment, UE, the second network-side device and the first network-side device both covering the UE, the UE being connected to the first network-side device, **characterized in that**, the second network-side device belongs to a Universal Mobile Telecommunication System and comprises:
an obtaining unit, configured to: in response to a connection reestablishment request message sent by the UE, attempt to obtain UE Context of the UE; and
a processing unit, configured to send a connection reestablishment failure message to the UE when the obtaining unit fails to obtain the UE Context of the UE so as to enable a non-access stratum of the UE to trigger a connection establishment request according to the connection reestablishment failure message, or send a connection reestablishment acknowledgement message to the UE when the obtaining unit successfully obtains the UE Context of the UE to enable the UE to connect to the second network-side device.

19. A user equipment, UE, in a mobile communication system, the mobile communication system comprising a first network-side device, a second network-side device, and the UE; the first network-side device and the second network-side device both covering the UE, the UE being connected to the first network-side device, **characterized in that**, the second network-side device belongs to a Universal Mobile Telecommunication System, and the UE comprises:
a requesting unit, configured to send a connection reestablishment request message to the second network-side device when the UE disconnects from the first network-side device and detects a radio link failure to enable the second network-side device to attempt to obtain UE Context of the UE; and
a connecting unit, configured to: in response to a connection reestablishment failure message which indicates failure to obtain the UE Context and is received from the second network-side device, enable a non-access stratum of the UE to trigger a connection establishment request to connect to the second network-side device, or in response to a connection reestablishment acknowledgement message which indicates success of obtaining the UE Context and is received from the second network-side device, enable the UE to connect to the second network-side device.

20. A mobile communication system, comprising a first network-side device, a second network-side device, and a user equipments, UE, the first network-side device and second network-side device both covering the UE, the UE being connected to the first network-side device, **characterized in that**,
the second network-side device comprises:
a backing up unit, configured to back up UE Context of the UE outside the first network-side device,
the UE comprises:
a requesting unit, configured to send a connection reestablishment request message to the second network-side device when the UE disconnects from the first network-side device and detects a radio link failure, RLF; and
a connecting unit, configured to: in response to a connection reestablishment acknowledgement message received from the second network-side device, enable the UE to connect to the second network-side device, and
the second network-side device comprises:
an obtaining unit, configured to: in response to the connection reestablishment request message, obtain UE Context; and
a processing unit, configured to send the connection reestablishment acknowledgement message to the UE when the obtaining unit successfully obtains the UE Context.

21. The mobile communication system according to claim 20, **characterized in that**, backing up, by the backing up unit, the UE Context of the UE outside the first network-side device comprises: sending, by the backing up unit, the UE Context of the UE to the UE,
wherein, the UE further comprises:
a saving unit, configured to receive and save the UE Context received from the backing up unit.

22. The mobile communication system according to claim 21, **characterized in that**, the connection reestablishment request message comprises the UE Context saved in the saving unit of the UE, and
obtaining, by the obtaining unit, the UE Context comprises: extracting, by the obtaining unit, the UE Context out of the connection reestablishment request message.

23. The mobile communication system according to claim 20, **characterized by** further comprising a mobility management entity, MME, wherein:
the backing up, by the backing up unit, the UE Context of the UE outside the first network-side device comprises: sending, by the backing up unit, the UE Context of the UE, and
the MME is configured to receive and save the UE Context received from the backing up unit.

24. The mobile communication system according to claim 23, **characterized in that**, the obtaining, by the obtaining unit, the UE Context comprises: requesting, by the obtaining unit, the MME for the UE Context received and saved by the MME.
